# EUROPEAN PATENT SPECIFICATION

(11) **EP 3 733 883 B1**
(45) Date of publication and mention of the grant of the patent: **17.07.2024**
(21) Application number: 19771362.1
(22) Date of filing: 13.03.2019
(51) Int. Cl.: C22B 7/02, C22B 1/16, C02F 11/00, C02F 11/12, C22B 1/24, C02F 11/122, C02F 103/16, C21C 7/00, C21C 5/56, C22B 1/242

(54) **GRANULATED MATERIAL, METHOD FOR MANUFACTURING GRANULATED MATERIAL, AND METHOD FOR MANUFACTURING SINTERED ORE**
GRANULIERTES MATERIAL, VERFAHREN ZUR HERSTELLUNG EINES GRANULIERTEN MATERIALS UND VERFAHREN ZUR HERSTELLUNG VON SINTERERZ
MATÉRIAU GRANULÉ, PROCÉDÉ DE FABRICATION DE MATÉRIAU GRANULÉ ET PROCÉDÉ DE FABRICATION DE MINERAI FRITTÉ

(30) Priority: 20.03.2018 JP 2018052269
(43) Date of publication of application: 04.11.2020
(73) Proprietor: JFE Steel Corporation, Tokyo 100-0011 (JP)
(72) Inventor: TAKEHARA, Kenta, Tokyo 100-0011 (JP); YAMAMOTO, Tetsuya, Tokyo 100-0011 (JP); KUROIWA, Masato, Tokyo 100-0011 (JP); KOBAYASHI, Naoto, Tokyo 100-0011 (JP); JINNO, Tetsuya, Tokyo 100-0011 (JP)
(74) Representative: Hoffmann Eitle
(86) International application number: PCT/JP2019/010154
(87) International publication number: WO 2019/181672

(56) References cited:
- WO-A1-2008/032638
- WO-A1-2013/140810
- JP-A- 2012 144 784
- JP-A- 2015 014 015
- JP-A- H09 157 763
- JP-A- S5 521 581
- JP-A- S5 521 581

## Description

### Technical Field

The present invention relates to a granulated material that contains sludge and dust which are generated in steel-making processes and that has improved conveyer transportability, a method for manufacturing the granulated material, and a method for manufacturing sintered ore using the granulated material.

### Background Art

In various steel-making processes such as a pig iron-making process, a steelmaking process, and a rolling process, large amounts of dust and sludge are generated. Since such dust and sludge have high iron and carbon contents, it is preferable that such dust and sludge be reused as iron sources and heat sources instead of being discarded as waste. Generally, dust and sludge are used in high-temperature processes in a pig iron-making process and a steelmaking process. Dust and sludge are re-melted in the high-temperature processes and mixed into molten pig iron so as to be reused as iron sources.

Since the dust is fine powder having a water content of 0 mass% to 5 mass%, dust raising occurs when the dust is transported by a belt conveyer. On the other hand, since the sludge has a high water content and high adhesiveness, the sludge adheres to a conveyer junction and thereby causes clogging when the sludge is transported by a belt conveyer. As just described, dust raising or clogging due to adhesion occurs when the dust and the sludge are transported by a belt conveyer.

In response to such a problem, Patent Literature 1 discloses a method for manufacturing a granulated material in which cake-shaped sludge generated in steel-making processes is cracked, mixed with a fixation agent and dust generated in steel-making processes, and subjected to a granulating treatment by using an apparatus for manufacturing a granulated material which has a stirring impeller revolving in a drum and a stirring rotor rotating while revolving along with the stirring impeller. It is disclosed that, by using the method described above, it is possible to appropriately perform a granulating treatment without performing a special drying treatment so that it is possible to manufacture a granulated material which can preferably be used in high-temperature processes. Patent Literature 2, Patent Literature 3 and Patent Literature 4 also disclose a granulated material from steel-making process dusts.

### Citation List

### Patent Literature

PTL 1: Japanese Unexamined Patent Application Publication No. 2012-97295
PTL 2: WO 2008/032 638 A1
PTL 3: JP S55 21581 A
PTL 4: JP 2012 144784 A

### Summary of Invention

### Technical Problem

Since the granulated material disclosed in Patent Literature 1 has a high water content, a large amount of such granulated material adheres to a conveyer junction when such a granulated material is transported by a belt conveyer. In particular, since a belt conveyer is placed at an outdoor location at a steel plant, rain also falls on the belt conveyer when it rains. Therefore, when it rains, since the granulated material has a further increased water content, there is an increase in the amount of adhesion to the conveyer junction, which results in a problem of clogging due to the granulated material adhering in such a manner.

The present invention has been completed in view of the above-described problems of the conventional techniques, and an object of the present invention is to provide a granulated material with which it is possible to decrease the amount of adhesion to a conveyer junction.

### Solution to Problem

The present invention, which has been completed to solve the problems described above, is characterized as follows.

The present invention provides a granulated material containing dust and sludge which are generated in steel-making processes,
wherein the dust which is generated in steel-making processes is fine powder having a water content of 0 mass% to 5 mass%,
wherein the sludge which is generated in steel-making processes is fine powder having a water content of 20 mass% or more,
wherein a water content of the granulated material is 10 mass% or more and 18 mass% or less, and a content of a granulated material having a particle size of 0.125 mm or more is 90 mass% or more, and
wherein the granulated material according to item (1), in which a surface water content of the granulated material is 10 mass% or more and 15 mass% or less.

The present invention further provides a method for manufacturing the granulated material of the present invention, the method including a dehydrating process of dehydrating sludge to obtain a dehydrated cake and a granulating process of making a granulated material by mixing and granulating the dehydrated cake and dust by using a stirring apparatus having a stirring impeller.

Furthermore, the present invention provides a method for manufacturing sintered ore, the method including a blending process of blending at least the granulated material manufactured by using the above method for manufacturing a granulated material, an iron-containing raw material, a CaO-containing raw material, and a binding material to obtain a sintering raw material, a granulating process of granulating the sintering raw material by adding water to the sintering raw material, and a sintering process of sintering the granulated sintering raw material by using a sintering machine to obtain sintered ore.

### Advantageous Effects of Invention

By using the granulated material according to the present invention, it is possible to decrease the amount of adhesion of the granulated material to the conveyer junction of a belt conveyer placed at an outdoor location, even when it rains. With this, it is possible to inhibit clogging due to the granulated material from occurring when belt conveyer transport is performed.

### Brief Description of Drawings

[Fig. 1] Fig. 1 is a perspective view of the inside of a stirring apparatus 10 used for manufacturing the granulated material according to the present embodiment.
[Fig. 2] Fig. 2 is a plan view of the stirring apparatus 10.
[Fig. 3] Fig. 3 is a diagram illustrating a testing method used for checking a change in the viscidity of a dehydrated cake which has been subjected to a shearing force of a certain magnitude or more.
[Fig. 4] Fig. 4 is a side view of an adhesiveness testing apparatus 30.

### Description of Embodiments

Hereafter, the present invention will be described in accordance with an embodiment of the invention. The granulated material according to the present embodiment is a granulated material containing sludge and dust which are generated in steel-making processes. A water content of the granulated material is 10 mass% or more and 18 mass% or less, and a content of a granulated material having a particle size of 0.125 mm or more is 90 mass% or more. In the present embodiment, the water content of the granulated material is calculated by dividing a difference in the mass of the granulated material before and after the granulated material is dried by the mass of the granulated material before the granulated material is dried, where drying is performed on the granulated material at a temperature of 110°C for 12 hours. The content of a granulated material having a particle size of 0.125 mm or more is calculated after the granulated material has been dried by using a method similar to that described above by dividing the mass of the granulated material remaining on a sieve having a sieve mesh of 0.125 mm by the mass of the granulated material before sieving is performed.

By controlling the water content of the granulated material to be in the range of 10 mass% or more and 18 mass% or less and the content of a granulated material having a particle size of 0.125 mm or more to be 90 mass% or more, there is a decrease in the amount of adhesion to a conveyer junction, even when the granulated material is transported by a belt conveyer placed at an outdoor location in the rain. As just described, by using the granulated material according to the present embodiment, since it is possible to decrease the amount of adhesion to a conveyer junction when it rains, it is possible to inhibit clogging by the granulated material occurred due to the above-described adhesion.

On the other hand, in the case where the water content of the granulated material is less than 10 mass%, there is an increase in the amount of fine particles due to granulating not progressing. Since fine particles are more likely than coarse particles to cause adhesion, there is an increase in the amount of adhesion to a conveyer junction due to the adhesion of such fine particles. In the case where the water content of the granulated material is more than 18 mass%, since liquid bridge-formation forces, which are caused by water, increase with an increase in the water content, there is an increase in the amount of adhesion of the granulating raw material to a conveyer junction regardless of the particle size. As just described, there is an upper limit and a lower limit to the water content of the granulated material with which it is possible to decrease the amount of adhesion to a conveyer junction. Moreover, also in the case where the content of a granulate material having a particle size of 0.125 mm or more is less than 90 mass%, since there is an increase in the amount of adhesion to a conveyer junction, it is not possible to inhibit clogging due to the granulated material from occurring when belt conveyer transport is performed.

The surface water content of the granulated material is 10 mass% or more and 15 mass% or less. With this, there is a further decrease in the amount of adhesion of the granulated material to a conveyer junction. The surface water content of the granulated material is determined by using, for example, a near-infrared moisture gauge, which is used for determining the water content of only the surface of the granulated material. In the present invention, the water content of the surface is evaluated in accordance with the calibration curve of a near-infrared absorption spectrum method by using a near-infrared moisture gauge which has been calibrated by using granulating raw materials having a water content of 0 mass% to 30 mass% prepared by uniformly mixing sludge and dust. In the description hereafter, a material prepared by mixing the dehydrated sludge cake with dust may be referred to as a "granulating raw material".

Hereafter, the method for manufacturing the granulated material according to the present embodiment will be described. First, a dehydrating process of dehydrating sludge, which is generated in steel-making processes, by using a compression-type dehydrating apparatus to obtain a dehydrated cake is performed. Next, a granulating process of making a granulated material by mixing and granulating the dehydrated cake and dust, which is generated in steel-making processes, by using a stirring apparatus is performed. In such a manner, the granulated material according to the present invention is manufactured. Examples of a compression-type dehydrating apparatus include a filter press and a vacuum filter.

The sludge used in the present invention is sludge which is generated in steel-making processes, such as a pig iron-making process, a steelmaking process, a rolling process, a coating process, and a pickling process, and fine powder having a water content of 20 mass% or more.

The dust used in the present invention is dust which is generated in steel-making processes, such as a pig iron-making process, sintering ore-making process, and a steelmaking process, and fine powder having a water content of 0 mass% to 5 mass%.

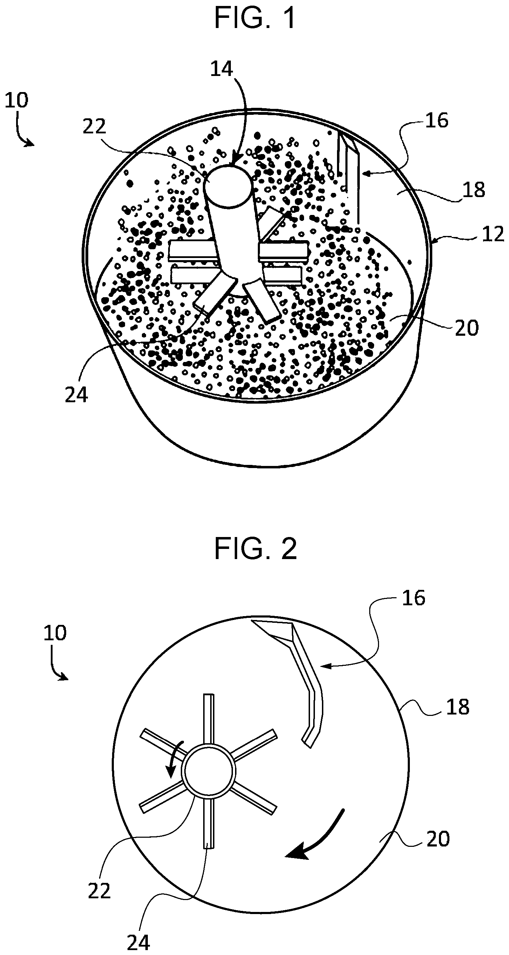

Fig. 1 is a perspective view of the inside of a stirring apparatus 10 used for manufacturing the granulated material according to the present embodiment. Fig. 2 is a plan view of the stirring apparatus 10. The stirring apparatus 10 is an apparatus with which a dehydrated cake, which has been obtained by dehydrating sludge, is finely cracked and with which the finely cracked dehydrated cake and dust are mixed and granulated to make a granulated material.

The stirring apparatus 10 has a cylindrical container 12, into which the dehydrated cake and the dust are charged, a stirring impeller 14, and a weir 16. Although it is preferable that the weir 16 be installed to scratch off the granulating raw material, the weir need not be installed. The cylindrical container 12 has a cylinder 18 and a circular bottom panel 20. The cylindrical container 12 has an opening (not illustrated) for the charge and discharge of the dehydrated cake and the dust. The bottom panel 20 and the cylinder 18 are installed in an integrated manner, and the bottom panel 20 is made to rotate along with the cylinder 18 by a driving force. The cylindrical container 12 may have a top panel for sealing the top of the cylindrical container 12.

The stirring impeller 14 has a rotation axis 22 and plural stirring blades 24. The rotation axis 22 is located at a position shifted from the center of the cylindrical container 12. The stirring impeller 14 is made to rotate by a driving force which is supplied from an unillustrated driving unit placed above the cylindrical container 12. As just described, each of the cylindrical container 12 and the stirring impeller 14 is made to rotate by a driving force which is supplied from a corresponding one of the different driving units so as to separately rotate. The rotation axis 22 may also be located at the center of the cylindrical container 12.

The stirring blades 24 are fitted to the rotation axis 22 so as to extend outward from the axis in a radial manner. The stirring blades 24 are fitted at two positions of the rotation axis 22 which are vertically separated from each other so as to extend in six directions at intervals of 60° at each of the positions.

The number of the stirring blades 24 and the fitting positions in the vertical direction of the stirring blades 24 may appropriately be changed in accordance with the amounts of the dehydrated cake and the dust which are charged into the cylindrical container 12.

While the bottom panel 20 rotates, for example, clockwise, the stirring impeller 14 rotates counterclockwise with the dehydrated cake being contained in the cylindrical container 12. As a result of the bottom panel 20 rotating clockwise, the dehydrated cake contained in the cylindrical container 12 rotates clockwise following the rotation direction of the bottom panel 20. The dehydrated cake rotating clockwise is cracked as a result of impinging on the stirring impeller 14 rotating counterclockwise. The rotation direction of each of the bottom panel 20 and the stirring impeller 14 is not limited to clockwise or counterclockwise. The rotation directions of the bottom panel 20 and the stirring impeller 14 may be the same or different from each other.

Although the stirring apparatus 10 is horizontally positioned in the example illustrated in Fig. 1 and Fig. 2, the stirring apparatus 10 may be obliquely positioned with respect to a horizontal plane. It is acceptable that the cylindrical container 12 only be obliquely positioned with respect to a horizontal plane while a shaft of the stirring impeller 14 is vertically supported. By using the stirring apparatus 10, the dehydrated cake is finely cracked, and the cracked dehydrated cake and the dust are mixed. With this, since water contained in the dehydrated cake is efficiently transferred to the dust, there is a decrease in the amount of powder remaining non-granulated.

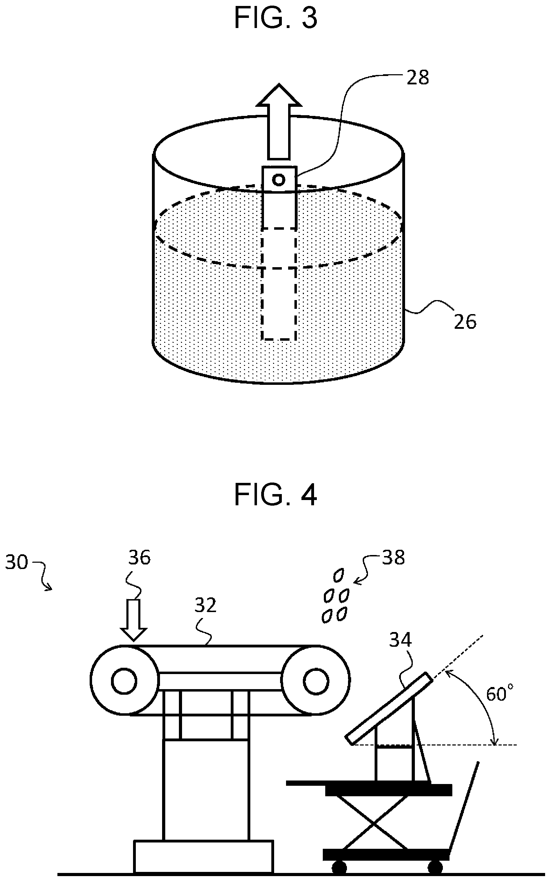

Fig. 3 is a diagram illustrating a testing method used for checking a change in the viscidity of a dehydrated cake which has been subjected to a shearing force of a certain magnitude or more. As illustrated in Fig. 3, a container 26 having a diameter of 155 mm is filled with the cracked dehydrated cake, which has been cracked by using the stirring apparatus 10, and an SS-made testing plate 28 is thereafter pushed downward in the direction perpendicular to the bottom surface into the dehydrated cake with a pushing load of 200 N. This testing plate 28 is pulled out upward in the direction perpendicular to the bottom surface at a speed of 3 mm/sec while the pulling-out force is measured by using an Autograph (registered trademark) produced by Shimadzu Corporation. The testing conditions and the results are given in Table 1.

**[Table 1]**

| Condition | 1 | 2 | 3 |
|---|---|---|---|
| Cracking Treatment | Not Done | Done | Done |
| Circumferential Speed of Stirring Impeller (m/sec) | - | 3.3 | 9.3 |
| Rotational Speed of Container (rpm) | - | 50 | 50 |
| Stirring time (sec) | - | 5 | 60 |
| Pulling-out Force (kPa) | 2.9 | 3.6 | 9.4 |

As indicated in Table 1, by increasing the circumferential speed of the stirring impeller in the stirring apparatus 10, the rotational speed, and the granulating time, there was an increase in the pulling-out force of the testing plate 28. From this result, it is clarified that, by applying a shearing force to the dehydrated cake to finely crack the dehydrated cake, there is an increase in the viscidity of the dehydrated cake.

Since there is an increase in the viscidity of the dehydrated cake as a result of cracking the dehydrated cake by using the stirring apparatus 10 as just described, and since the dehydrated cake which has been finely cracked and the dust are mixed, there is a further decrease in the amount of powder remaining non-granulated. Moreover, since fine particles, which tend to adhere to a conveyer junction when conveyer transport is performed, are taken into the granulated material, there is a decrease in the amount of adhesion of the fine particles to a conveyer junction, which results in a decrease in the amount of adhesion to a conveyer junction.

It is possible to adjust the water content of the granulated material by adjusting the mixing ratio of dust, which has a low water content. In the case where the water content of the granulated material is high, since the viscidity of the cracked dehydrated cake remains, the granulated material adheres to a conveyer junction when conveyer transport is performed. Therefore, in the present embodiment, the mixing amount of the dust is adjusted so that the water content of the granulated material is in the range of 10 mass% or more and 18 mass% or less.

It is possible to adjust the content of the granulated material having a particle size of 0.125 mm or more by adjusting the circumferential speed of the stirring impeller 14 and the rotation time of the stirring impeller 14. In the case where granulating raw materials having an identical composition are granulated by using stirring apparatuses 10 having an identical configuration, and the rotation time of the stirring impeller 14 is identical, the content of the granulated material having a particle size of 0.125 mm or more increases with an increase in the circumferential speed of the stirring impeller 14. Similarly, in the case where granulating raw materials having an identical composition are granulated by using identical stirring apparatuses 10, and the circumferential speed of the stirring impeller 14 is identical, the content of the granulated material having a particle size of 0.125 mm or more increases with an increase in the rotation time of the stirring impeller 14. In the present embodiment, the circumferential speed and rotation time of the stirring impeller 14 are adjusted so that the content of the granulated material having an average particle size of 0.125 mm or more is 90 mass% or more.

### EXAMPLES

Hereafter, examples in which granulated materials according to the present embodiment were manufactured and the transportability of the granulated materials was evaluated will be described. In the present examples, to manufacture plural kinds of granulated materials so that the content of the granulated material having an average particle size of 0.125 mm or more varies from one kind to another, the granulated materials were manufactured by using two different granulating methods. In one of the granulating methods, an EIRICH intensive mixer type RV02, which has the same configuration as that of the stirring apparatus 10 illustrated in Fig. 1, was used, and the granulated material was manufactured by varying the circumferential speed of the stirring impeller and the granulating time to vary the content of the granulated material having a particle size of 0.125 mm or more. In the other granulating method, a drum-type granulating apparatus was used to intensify granulation, and the granulated material was manufactured by varying the granulating time and the rotational speed of the drum to vary the content of the granulated material having a particle size of 0.125 mm or more.

The water content of the dehydrated cake prepared by dehydrating the sludge, which was used as a granulating raw material, was 20 mass%, and the water content of the dust was 0 mass%. By varying the mixing ratios of the dehydrated cake and dust, the water content of the granulated material was adjusted. For example, to manufacture a granulated material having a water content of 16 mass%, 80 mass% of a dehydrated cake and 20 mass% of dust were mixed. The granulated materials of the examples of the present invention and the granulated materials of the comparative examples were manufactured in an amount of 8 kg each. The compositions of the dust and the sludge used in the tests are given in Table 2 below. In Table 2, the expression "T-Fe" is an abbreviation for "total Fe" and denotes the mass content of iron atoms in the dust or the sludge. In Table 2, the reason why the total content of the constituents of the dust or the sludge is not equal to 100 is because the dust or the sludge contains other constituents, which are not given in the table, such as CaO.

**[Table 2]**

| | T-Fe | SiO₂ | Al₂O₃ | C | Metallic Fe |
|---|---|---|---|---|---|
| Dust | 31.9 | 6.7 | 3.3 | 13.2 | 0.3 |
| Sludge | 60.5 | 1.6 | 0.6 | 10.7 | 31.9 |

| | | | | | |
|---|---|---|---|---|---|
| unit: mass% | | | | | |

The granulated materials manufactured as described above were evaluated in terms of the content of the granulated material having a particle size of 0.125 mm or more and adhesiveness. The content of a granulated material having a particle size of 0.125 mm or more was calculated by using the mass of the granulated material which had been dried at a temperature of 110°C for 12 hours 4remaining on a sieve having a sieve mesh of 0.125 mm.

Fig. 4 is a side view of an adhesiveness testing apparatus 30. The adhesiveness testing apparatus 30 has a belt conveyer 32 and a chute 34, which simulates a conveyer junction. In the evaluation of the amount of adhesion of the granulated material utilizing the adhesiveness testing apparatus 30, after having charged 8 kg of the granulated material from the position indicated by arrow 36, transported the granulated material by the belt conveyer 32, and dropped the granulated material onto the chute 34, the amount of granulated material which had adhered to the chute 34 was determined. The charging flow rate of the granulated material and the speed of the belt conveyer 32 were adjusted so that the transport rate of the granulated material was 0.8 kg/sec. The amount of adhesion was evaluated in two cases, that is, a case without water spray and a case with water spray. In the case with water spray, the granulated material was transported while being sprayed with water 38 at a water spray rate of 185 g/min for simulation of rain. The granulating conditions of the granulated materials and the evaluation results are given in Table 3 and Table 4.

**[Table 3]**

| | Item | Example 1 | Comparative Example 1 |
|---|---|---|---|
| Manufacturing Condition | Granulating Method | Stirring Apparatus | Drum-Type Granulating Apparatus |
| | Granulating Time (sec) | 60 | 60 |
| | Circumferential Speed of Stirring Impeller (m/sec) | 6.6 | - |
| | Rotational Speed of Container (rpm) | 50 | 20 |
| Granulated Material Property | Water Content of Granulated Material (mass%) | 16 | 16 |
| | Content of +0.125 mm (mass%) | 96.9 | 86.3 |
| Result | Amount of Adhesion without Water Spray (g) | 0.9 | 5.3 |
| | Amount of Adhesion with Water Spray (g) | 3.2 | 18.7 |

**[Table 4]**

| | Item | Example 2 | Example 1 | Example 3 | Comparative Example 2 | Comparative Example 3 |
|---|---|---|---|---|---|---|
| Granulated Material Property | Water Content of Granulated Material (mass%) | 10 | 16 | 18 | 8 | 20 |
| | Content of +0.125 mm (mass%) | 93.3 | 96.9 | 98.6 | 79.9 | 99.9 |
| Result | Amount of Adhesion without Water Spray (g) | 0.5 | 0.9 | 3.3 | 5.3 | 8.8 |
| | Amount of Adhesion with Water Spray (g) | 5.7 | 3.2 | 4.5 | 40.4 | 16.1 |

In Table 3 and Table 4, the term "Granulating Time" denotes the time for which the stirring impeller was rotated in the case where a stirring apparatus was used. On the other hand, in the case where a drum-type granulating apparatus was used, the term "Granulating Time" denotes the time for which the drum was rotated. The term "Content of +0.125 mm" denotes the content of the granulated material having a particle size of 0.125 mm or more. Also, in the Tables below, the term "Content of +0.125 mm" denotes the content of the granulated material having a particle size of 0.125 mm or more.

As indicated in Table 3, regardless of whether or not water spray was performed, the amount of adhesion of the granulated material in the case of Example 1 where the content of the granulated material having a particle size of 0.125 mm or more was 90 mass% or more was less than that in the case of Comparative Example 1 where the content of the granulated material having a particle size of 0.125 mm or more was less than 90 mass%.

As indicated in Table 4, regardless of whether or not water spray was performed, the amounts of adhesion of the granulated materials in the case of Examples 1 through 3 where the water contents of the granulated materials were in the range of 10 mass% or more and 18 mass% or less were less than those in the case of Comparative Example 2 where the water content of the granulated material was less than 10 mass% and in the case of Comparative Example 3 where the water content was more than 18 mass%.

From these results, it is clarified that it is possible to decrease the amount of adhesion to the chute 34, which is placed at the position of a conveyer junction, by controlling the content of the granulated material having a particle size of 0.125 mm or more to be 90 mass% or more and the water content of the granulated material to be 10 mass% or more and 18 mass% or less. It is preferable that the content of the granulated material having a particle size of 0.125 mm or more be as high as possible, it is more preferable that the content be 93 mass% or more or even more preferably 97 mass% or more, and the upper limit of the content is 100 mass%. It is preferable that the water content of the granulated material be 12 mass% or more and 17 mass% or less or more preferably 14 mass% or more and 16 mass% or less.

Hereafter, the results of the investigations regarding the effect of the surface water content of the granulated material will be described. By using the dust and the sludge used for the investigations whose results are given in Table 3 and Table 4, by mixing and granulating 80 mass% of the dehydrated cake and 20 mass% of the dust, granulated materials having a water content of 16 mass% were manufactured in an amount of 8 kg each. In the case of Reference Example 4, to obtain a granulated material having a low surface water content, by rotating the drum-type granulating apparatus (rotational speed: 20 rpm) for 360 seconds for granulation, a granulated material having a surface water content of less than 10 mass%, that is, 8.3 mass%, was manufactured.

In the case of Reference Example 6, to obtain a granulated material having a high surface water content, after having manufactured a granulated material by using the Intensive Mixer (circumferential speed of stirring impeller: 6.6 m/s, granulating time: 60 seconds), the granulated material was left in atmospheric air until the water content decreased to 1 mass%. Next, by rotating the drum-type granulating apparatus (rotational speed: 20 rpm) for 60 seconds while spraying water in an amount equivalent to a water content of 1 mass%, a granulated material having a high surface water content was manufactured. The manufacturing conditions and evaluation results of these granulated materials are given in Table 5. The surface water contents of these granulated materials were determined by using a near-infrared moisture gauge.

**[Table 5]**

| | Item | Reference Example 4 | Example 5 | Example 1 | Reference Example 6 |
|---|---|---|---|---|---|
| Manufacturing Condition | Granulating Method | Drum-Type Granulating Apparatus | Stirring Apparatus | Stirring Apparatus | Stirring Apparatus + Drum-Type Granulating Apparatus |
| | Granulating Time (sec) | 360 | 30 | 60 | 60 + 60 |
| Granulated Material Property | Water Content of Granulated Material (mass%) | 16 | 16 | 16 | 16 |
| | Content of +0.125 mm (mass%) | 92.5 | 93.2 | 96.9 | 99.4 |
| | Surface Water Content of Granulated Material (mass%) | 8 | 11 | 15 | 17 |
| Result | Amount of Adhesion without Water Spray (g) | 1.5 | 0.7 | 0.9 | 1.6 |
| | Amount of Adhesion with Water Spray (g) | 7.4 | 6.3 | 3.2 | 5.6 |

As indicated in Table 5, when water spray was not performed, the amounts of adhesion in the case of Example 5 and Example 1 where the surface water content was 10 mass% or more and 15 mass% or less were less than those in the case of Reference Example 4 where the surface water content was less than 10 mass% and in the case of Reference Example 6 where the surface water content was more than 15 mass%. On the other hand, when water spray was performed, the amount of adhesion in the case of Example 5 was slightly more than that in the case of Reference Example 6. This is considered to be because there was a decrease in the effect of the surface water content due to water spray. Even when water spray was performed, the amount of adhesion in the case of Example 5 was less than that in the case of Reference Example 4, and the amount of adhesion in the case of Reference Example 6 was more than that in the case of Example 1. Therefore, it is clarified that, even when water spray was performed, there was a tendency for the amount of adhesion to the chute 34 to decrease as a result of controlling the surface water content to be 10 mass% or more and 15 mass% or less. From these results, it may be said that it is possible to further decrease the amount of adhesion to the chute 34, which is placed at the position of a conveyer junction, by controlling the surface water content of the granulated material to be 10 mass% or more and 15 mass% or less. It is preferable that the surface water content of the granulated material be 11 mass% or more and 15 mass% or less or more preferably 12 mass% or more and 14 mass% or less.

As indicated by Reference Example 4, it is possible to manufacture the granulated material according to the present embodiment not only by using the stirring apparatus 10 but also by using the drum-type granulating apparatus. However, the drum-type granulating apparatus is poor in terms of capability to crack a dehydrated cake. As a result, there is an increase in the granulating time required to manufacture the granulated material according to the present embodiment. Therefore, it is preferable that the granulated material according to the present embodiment be manufactured by using a stirring apparatus instead of a drum-type granulating apparatus.

Hereafter, the results of the investigations regarding stirring conditions for controlling the content of the granulated material having a particle size of 0.125 mm or more to be within the appropriate range will be described. By using the dust and the sludge used for the investigations whose results are given in Table 3 and Table 4, by mixing and granulating 80 mass% of the dehydrated cake and 20 mass% of the dust by using the EIRICH intensive mixer type RV02 with various circumferential speeds of the stirring impeller and with various granulating times, granulated materials having a water content of 16 mass% were manufactured in an amount of 8 kg each. The granulating conditions and evaluation results of these granulated materials are given in Table 6 and Table 7.

**[Table 6]**

| | Item | Comparative Example 4 | Reference Example 7 | Example 1 | Example 8 |
|---|---|---|---|---|---|
| Manufacturing Condition | Granulating Method | Stirring Apparatus | Stirring Apparatus | Stirring Apparatus | Stirring Apparatus |
| | Granulating Time (sec) | 60 | 60 | 60 | 60 |
| | Circumferential Speed of Stirring Impeller (m/sec) | 3.3 | 4.7 | 6.6 | 9.4 |
| Granulated Material Property | Content of +0.125 mm (mass%) | 88.7 | 89.8 | 96.9 | 99.2 |
| | Surface Water Content of Granulated Material (mass%) | 6 | 8 | 15 | 15 |
| Result | Amount of Adhesion without Water Spray (g) | 2.9 | 2.2 | 0.9 | 0.3 |
| | Amount of Adhesion with Water Spray (g) | 16.1 | 13.2 | 3.2 | 2.7 |

**[Table 7]**

| | Item | Example 9 | Example 1 | Example 10 |
|---|---|---|---|---|
| Manufacturing Condition | Granulating Method | Stirring Apparatus | Stirring Apparatus | Stirring Apparatus |
| | Granulating Time (sec) | 30 | 60 | 120 |
| | Circumferential Speed of Stirring Impeller (m/sec) | 6.6 | 6.6 | 6.6 |
| Granulated Material Property | Content of +0.125 mm (mass%) | 95.1 | 96.9 | 97.2 |
| | Surface Water Content of Granulated Material (mass%) | 13 | 15 | 14 |
| Result | Amount of Adhesion without Water Spray (g) | 1.2 | 0.9 | 0.6 |
| | Amount of Adhesion with Water Spray (g) | 3.3 | 3.2 | 2.4 |

As indicated in Table 6, there was an increase in the content of the granulated material having a particle size of 0.125 mm or more as a result of increasing the circumferential speed of the stirring impeller, and the content of the granulated material having a particle size of 0.125 mm or more was 90 mass% or more in the case where the circumferential speed of the stirring impeller was 4.7 m/s or more.

From this result, it is clarified that, when the granulating time is 60 seconds, it is possible to control the content of the granulated material having a particle size of 0.125 mm or more to be 90 mass% or more by controlling the circumferential speed of the stirring impeller to be 4.7 m/s or more. It is clarified that the content of the granulated material having a particle size of 0.125 mm or more tends to increase with an increase in the circumferential speed of the stirring impeller and that the amount of adhesion tends to decrease with an increase in the content of the granulated material having a particle size of 0.125 mm or more regardless of whether or not water spray is performed. Since it was possible to control the content of the granulated material having a particle size of 0.125 mm or more to be almost 100 mass% by controlling the circumferential speed of the stirring impeller to be 9.4 m/sec, it is not possible to further increase the content of the granulated material having a particle size of 0.125 mm or more in the case where the circumferential speed is more than 9.4 m/sec. Therefore, it is preferable that the circumferential speed of the stirring impeller be 9.4 m/sec or less.

As indicated in Table 7, it was possible to increase the content of the granulated material having a particle size of 0.125 mm or more by increasing the granulating time, and it was possible to control the content of the granulated material having a particle size of 0.125 mm or more to be 90 mass% or more by controlling the granulating time to be 30 seconds or more.

From these results, it is clarified that, when the circumferential speed of the stirring impeller is 6.6 m/s, it is possible to control the content of the granulated material having a particle size of 0.125 mm or more to be 90 mass% or more by controlling the granulating time to be 30 seconds or more. It is clarified that the content of the granulated material having a particle size of 0.125 mm or more tends to increase with an increase in granulating time and that the amount of adhesion to the chute 34 tends to decrease with an increase in the content of the granulated material having a particle size of 0.125 mm or more regardless of whether or not water spray is performed. Since it is clarified that the amount of adhesion to the chute 34 tends to decrease with an increase in the content of the granulated material having a particle size of 0.125 mm or more, it is clarified that the upper limit of the content of the granulated material having a particle size of 0.125 mm or more is 100 mass%.

As just described, since it is clarified that the amount of adhesion tends to decrease with an increase in the content of the granulated material having a particle size of 0.125 mm or more in Table 6 and Table 7, it is clarified that the content of the granulated material having a particle size of 0.125 mm or more has an effect on the amount of adhesion and that it is possible to decrease the amount of adhesion of the granulated material to the chute 34, which is placed at a position of a conveyer junction, by increasing the content of the granulated material having a particle size of 0.125 mm or more to be 90 mass% or more. Although there is an increase in the amount of adhesion to the chute 34 when it rains, it is also clarified that it is possible to significantly decrease the amount of adhesion to the chute 34 when it rains by increasing the content of the granulated material having a particle size of 0.125 mm or more to be 90 mass% or more.

It is possible to use the granulated material according to the present embodiment for manufacturing sintered ore. For example, by adding the granulated material according to the present embodiment in a blending process of blending an iron-containing raw material, a CaO-containing raw material, and a binding material to obtain a sintering raw material, by adding water to the sintering raw material to granulate the sintering raw material in a granulating process, and by sintering the granulated sintering raw material by using a sintering machine to obtain sintered ore in a sintering process. Since it is possible to transport the granulated material according to the present embodiment by a belt conveyer, it is possible to transport the granulated material by a belt conveyer to a position where the raw materials such as an Fe-containing raw material are blended, and it is possible to easily mix the granulated material with the other raw materials.

Moreover, instead of the method in which the granulated material according to the present embodiment is added in the blending process, a method in which the granulated material according to the present embodiment is added in the posterior part of the granulating process so that the outer layer of the granulated sintering raw material is formed of the granulated material according to the present embodiment may be used. As just described, it is possible to use the granulated material according to the present embodiment for manufacturing sintered ore so as to be reused as an iron source and a heat source when sintered ore is manufactured. Reference Signs List

- 10: stirring apparatus
- 12: cylindrical container
- 14: stirring impeller
- 16: weir
- 18: cylinder
- 20: bottom panel
- 22: rotation axis
- 24: stirring blade
- 26: container
- 28: testing plate
- 30: adhesiveness testing apparatus
- 32: belt conveyer
- 34: chute
- 36: arrow
- 38: water

## Claims

1. A granulated material comprising dust and sludge which are generated in steel-making processes,
wherein the dust which is generated in steel-making processes is fine powder having a water content of 0 mass% to 5 mass%,
wherein the sludge which is generated in steel-making processes is fine powder having a water content of 20 mass% or more,
wherein a water content of the granulated material is 10 mass% or more and 18 mass% or less, and a content of a granulated material having a particle size of 0.125 mm or more is 90 mass% or more, and
wherein a surface water content of the granulated material determined by using a near-infrared moisture gauge as described in the description is 10 mass% or more and 15 mass% or less.

2. A method for manufacturing the granulated material as defined in Claim 1, the method comprising:
a dehydrating process of dehydrating sludge to obtain a dehydrated cake; and
a granulating process of making a granulated material by mixing and granulating the dehydrated cake and dust by using a stirring apparatus having a stirring impeller.

3. A method for manufacturing sintered ore, the method comprising:
a blending process of blending at least the granulated material manufactured by using the method for manufacturing a granulated material according to Claim 2, an iron-containing raw material, a CaO-containing raw material, and a binding material to obtain a sintering raw material;
a granulating process of granulating the sintering raw material by adding water to the sintering raw material; and
a sintering process of sintering the granulated sintering raw material by using a sintering machine to obtain sintered ore.

## Patentansprüche

1. Granuliertes Material, umfassend Staub und Schlamm, die in Stahlherstellungsverfahren erzeugt werden,
wobei der Staub, der in Stahlherstellungsverfahren erzeugt wird, feines Pulver mit einem Wassergehalt von 0 Masse-% bis 5 Masse-% ist,
wobei der Schlamm, der in Stahlherstellungsprozessen erzeugt wird, feines Pulver mit einem Wassergehalt von 20 Masse-% oder mehr ist,
wobei ein Wassergehalt des granulierten Materials 10 Masse-% oder mehr und 18 Masse-% oder weniger beträgt und ein Gehalt eines granulierten Materials mit einer Partikelgröße von 0,125 mm oder mehr 90 Masse-% oder mehr beträgt und
wobei ein Oberflächenwassergehalt des granulierten Materials, bestimmt unter Verwendung eines Nah-Infrarot-Feuchtigkeitsmessgeräts wie in der Beschreibung beschrieben, 10 Masse-% oder mehr und 15 Masse-% oder weniger beträgt.

2. Verfahren zur Herstellung des in Anspruch 1 definierten granulierten Materials, wobei das Verfahren umfasst:
einen Entwässerungsprozess zur Entwässerung von Schlamm, um einen entwässerten Kuchen zu erhalten, und
einen Granulierungsprozess zur Herstellung eines granulierten Materials durch Mischen und Granulieren des entwässerten Kuchens und Staub unter Verwendung einer Rührapparatur mit einem Impellerrührer.

3. Verfahren zur Herstellung von Sintererz, wobei das Verfahren umfasst:
einen Mischprozess zum Mischen von mindestens dem granulierten Material, das unter Verwendung des Verfahrens zur Herstellung eines granulierten Materials gemäß Anspruch 2 hergestellt wurde, eines eisenhaltigen Rohmaterials, eines CaO-haltigen Rohmaterials und eines Bindemittelmaterials, um ein Sinterrohmaterial zu erhalten,
einen Granulierungsprozess zum Granulieren des Sinterrohmaterials durch Zugabe von Wasser zu dem Sinterrohmaterial und
einen Sinterprozess zum Sintern des granulierten Sinterrohmaterials unter Verwendung einer Sintermaschine, um Sintererz zu erhalten.

## Revendications

1. Matériau granulé comprenant de la poussière et de la boue qui sont générées dans des processus de fabrication d'acier,
dans lequel la poussière qui est générée dans des processus de fabrication d'acier est une poudre fine présentant une teneur en eau de 0 % en masse à 5 % en masse,
dans lequel la boue qui est générée dans des processus de fabrication d'acier est une poudre fine présentant une teneur en eau de 20 % en masse ou plus,
dans lequel une teneur en eau du matériau granulé est de 10 % en masse ou plus et de 18 % en masse ou moins, et une teneur en un matériau granulé présentant une taille de particule de 0,125 mm ou plus est de 90 % en masse ou plus, et
dans lequel une teneur en eau de surface du matériau granulé déterminée en utilisant un hygromètre proche infrarouge tel que décrit dans la description est de 10 % en masse ou plus et de 15 % en masse ou moins.

2. Procédé de fabrication du matériau granulé selon la revendication 1, le procédé comprenant :
un processus de déshydratation consistant à déshydrater de la boue pour obtenir un gâteau déshydraté ; et
un processus de granulation consistant à fabriquer un matériau granulé par mélange et granulation du gâteau déshydraté et de poussière en utilisant un appareil d'agitation présentant une roue d'agitation.

3. Procédé de fabrication de minerai fritté, le procédé comprenant :
un processus de mélange consistant à mélanger au moins le matériau granulé fabriqué en utilisant le procédé de fabrication d'un matériau granulé selon la revendication 2, une matière première contenant du fer, une matière première contenant du CaO et un matériau liant pour obtenir une matière première de frittage ;
un processus de granulation consistant à granuler la matière première de frittage par l'ajout d'eau à la matière première de frittage ; et
un processus de frittage consistant à fritter la matière première de frittage granulée en utilisant une machine de frittage pour obtenir un minerai fritté.
